# EUROPEAN PATENT APPLICATION

(11) **EP 3 457 194 A1**
(43) Date of publication of application: **20.03.2019**
(21) Application number: 17796101.8
(22) Date of filing: 08.05.2017
(51) Int. Cl.: G02B 27/01, B60K 35/00

(54) **HEAD-UP DISPLAY DEVICE**

(30) Priority: 09.05.2016 JP 2016094073
(71) Applicant: Nippon Seiki Co., Ltd., Nagaoka-shi, Niigata 940-8580 (JP)
(72) Inventor: YAMAMURA, Ayako, Niigata (JP); HATANO, Takayuki, Niigata (JP); KOIIDA, Akinori, Niigata (JP); TANAKA, Shinichi, Niigata (JP)
(74) Representative: Jackson, Richard Eric
(86) International application number: PCT/JP2017/017417
(87) International publication number: WO 2017/195740

(57) **Abstract**

The purpose of the present invention is to provide a head-up display device capable of providing countermeasures against solar light without using a shutter or a reflective polarizer film. A case (20) includes a first shielding part (23) and a second shielding part (24) that sandwich optical paths between a first mirror (14) and a second mirror (16) and extend to the vicinity of a cross point (22) where the optical paths intersect. The tip end (23a) of the first shielding part (23) is located in front of the tip end (24a) of the second shielding part (24). A display (13) is arranged below the second shielding part (24) and in front of a line (L2) that connects the tip end (23a) of the first shielding part (23) and the tip end (24a) of the second shielding part (24). The first and second shielding parts (23, 24) block external light (25) entering from above an opening (20a) and block external light (25) that may enter the case (20) and travel toward the first mirror (14) after reflecting from the second mirror (16).

## Description

### Technical Field

The present invention relates to a head-up display device that takes countermeasures against sunlight.

### Background Art

A driver of a vehicle conducts driving while gazing at the front through a windshield and visually observing meters on an instrument panel. In other words, the line of sight moves to the front and the lower meters. When the driver can watch the meters while looking at the front, there is no movement of the line of sight, and thus an improvement in drivability can be expected. From this finding, head-up display devices have been developed and have been put to practical use. As a conventional technique related to a head-up display device, there is a technique disclosed in PTL 1.

As illustrated in Fig. 1 of PTL 1, image light beams emitted upward from a HUD display (2) (the parenthesized number indicates the reference numeral described in PTL 1, the same applies hereinafter) strike an inner surface of a windshield (5), are reflected, and are imaged in front of a driver (PTL 1, paragraph number [0012]). When not in use, a shutter (4) blocks an optical path so that external light (sunlight) does not reach the HUD display (2). This can prevent a damage of the HUD display (2) (PTL 1, paragraph number [0006]).

Since the shutter (4) and a driving unit that drives the shutter (4) are necessary, the head-up display device becomes costly and becomes large. In addition, when in use, in other words, during driving, the shutter (4) is open, so that it is impossible to prevent the incidence of sunlight at this time. A structure capable of preventing the incidence of sunlight all the time including during driving is demanded.

Therefore, the inventors of the invention have previously proposed a head-up display device capable of taking countermeasures against sunlight without using a shutter. As a conventional technique related to the head-up display device that takes countermeasures against sunlight, there is a technique disclosed in PTL 2.

As illustrated in Fig. 1 of PTL 2, a reflective polarizer film (21) (the parenthesized number indicates the reference numeral described in PTL 2, the same applies hereinafter) is interposed in an optical path. Due to the presence of the reflective polarizer film (21), the temperature of a liquid crystal shell (16) does not rise even when sunlight (b) enters (PTL 2, paragraph number [0013]). Furthermore, the reflective polarizer film (21) is attached to an upper surface of a glass board (22).

According to PTL 2, it is possible to take countermeasures against sunlight all the time. However, since the reflective polarizer film (21) and the glass board (22) are essential, there is concern about the head-up display device becoming costly and becoming large.

With a demand of downsizing and cost reduction of the head-up display device, a device that can take countermeasures against sunlight without using a shutter nor a reflective polarizer film is desired.

### Citation List

### Patent Literature

PTL 1 : JP-A-2003-237411
PTL 2 : Japanese Patent No. 4114194

### Summary of Invention

### Technical Problem

An object of the present invention is to provide a head-up display device capable of taking countermeasures against sunlight without using a shutter nor a reflective polarizer film.

### Solution to Problem

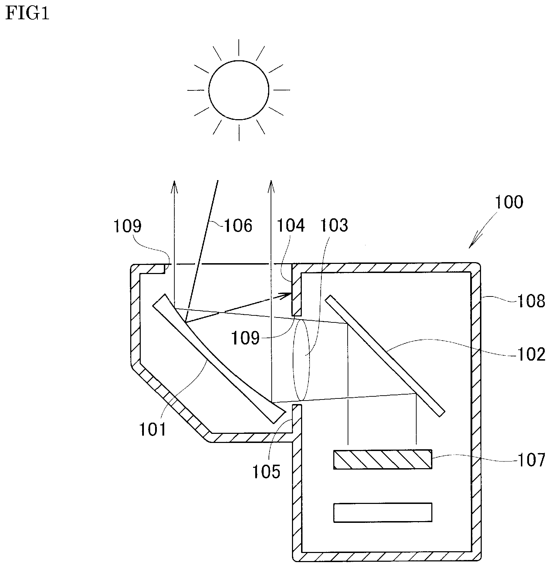

The inventors of the invention have tried improvement described below on the head-up display device illustrated in Fig. 1 of PTL 2 that the inventors of the invention proposed previously. An improved device 100 will be described on the basis of Fig. 1.

The head-up display device 100 illustrated in Fig. 1 is a primary improvement type device in which between a concave mirror 101 and a plane mirror 102, a shielding plate 104 and a shielding plate 105 were extended to the immediate vicinity of an optical path 103, unlike the device described in PTL 2. Sunlight 106 is reflected by the concave mirror 101, strikes the shielding plate 104, and stops, so that there is no concern about the sunlight 106 reaching a display 107.

Meanwhile, in recent years, upsizing of a display image has been demanded, and as a result, an opening 109 opened in an upper portion of a case 108 becomes large and the concave mirror 101 is upsized, which results in an increase in the width of the optical path 103. As the display image is upsized, the sunlight more easily intrudes, and thus countermeasures against that are demanded.

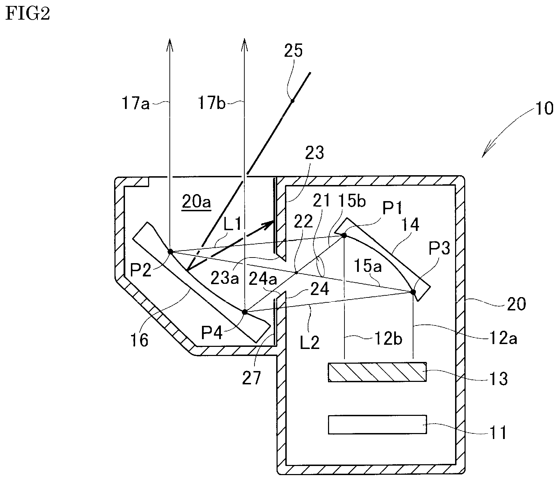

The inventors of the invention have further advanced the improvement, have completed a secondary improvement type device, and have succeeded in taking good countermeasures against sunlight. In other words, Fig. 2 illustrates a basic configuration diagram of a head-up display device 10, that is the secondary improved device.

As illustrated in Fig. 2, the head-up display device 10 is provided with a display 13 that is arranged above a light source 11 and emits display light 12a, 12b, a first mirror 14 that reflects the display light 12a, 12b emitted from the display 13 and is configured by a concave mirror, a second mirror 16 that reflects display light 15a, 15b reflected by the first mirror 14 and is configured by a concave mirror, and a case 20 that houses the light source 11, the display 13, and the first and second mirrors 14, 16.

In addition, the first mirror 14 has a curvature (reciprocal of the radius) that causes the reflected display light 15a, 15b to vertically cross each other before reaching the second mirror 16, and the second mirror 16 performs the function of reflecting the received display light. In other words, the first mirror 14 has a curvature that allows the focal point of the first mirror 14 to be positioned between the first mirror 14 and the second mirror 16. In further other words, a distance from the first mirror 14 to the second mirror 16 is set to be longer than a focal length of the first mirror 14.

The case 20 is provided with a first shielding part 23 and a second shielding part 24 that extend to the vicinity of a cross point 22 where the reflected display light 15a, 15b is to cross each other and sandwich an optical path 21 between the first and second mirrors 14, 16. The first and second shielding parts 23, 24 can shield external light 25 that intrudes into the case 20 from the outside of the case 20, is reflected by the second mirror 16, and travels toward the first mirror 14.

A lower end (tip end 23a) of the first shielding part 23 is positioned, at least, on the cross point 22 side (lower side) from a line segment L1 that connects an upper end portion P1 of a reflection region of the display light 12a, 12b in the first mirror 14 and an upper end portion P2 of a reflection region of the display light 15a, 15b in the second mirror 16.

An upper end (tip end 24a) of the second shielding part 24 is positioned, at least, on the cross point 22 side (upper side) from a line segment L2 that connects a lower end portion P3 of the reflection region of the display light 12a, 12b in the first mirror 14 and a lower end portion P4 of the reflection region of the display light 15a, 15b in the second mirror 16 are connected.

Furthermore, the first and second shielding parts 23, 24 extend such that the tips thereof approach each other. As the tips are closer to each other, the shielding property of the external light 25 is higher, which is desirable. In other words, it is desirable that the both tips be proximate to the cross point 22 (focal point).

It is to be noted that, generally, end portions of the reflection region correspond to end portions of the mirror surface that is formed in a concave shape. When a case where masking tape or the like is provided on the mirror surface is assumed, end portions of an exposed portion on the mirror surface can be considered as end portions of the reflection region.

From the findings in the foregoing, the invention according to claim 1 provides a head-up display device including a display that emits display light, a first mirror that reflects the display light emitted by the display, a second mirror that reflects the display light reflected by the first mirror, and a case that houses the display and the first and second mirrors, and includes an upper surface being opened, wherein:
the first mirror is a concave mirror having a curvature that causes the reflected display light to vertically cross each other before reaching the second mirror;
the second mirror is a mirror that reflects the received display light;
the case is provided with a first shielding part and a second shielding part that extend to the vicinity of the cross point where the reflected display light is to cross each other and sandwich an optical path between the first and second mirrors;
the first shielding part extends from a rear portion toward a front portion of the case, below the opening;
the second shielding part extends from the front portion toward the rear portion of the case, below the opening;
a tip end of the first shielding part is positioned in front of a tip end of the second shielding part;
the display is arranged in front of a line that connects the tip end of the first shielding part and the tip end of the second shielding part, and below the second shielding part; and
the first and second shielding parts shield external light that intrudes into the case from an outside of the case, is reflected by the second mirror, and travels toward the first mirror, and external light from above the opening.

As described in claim 2, preferably, the first shielding part is provided in parallel with light that is reflected at a lower end in a reflection region of the second mirror.

As described in claim 3, preferably, the display is provided along a line that connects the tip end of the first shielding part and the tip end of the second shielding part.

### Advantageous Effects of Invention

In the invention according to claim 1, the first mirror is a concave mirror that causes the reflected display light to vertically cross each other before reaching the second mirror. At the cross point where the reflected display light is to vertically cross each other, the width of the optical path becomes small. The first shielding part and the second shielding part are extended to the vicinity of the cross point so that the first shielding part and the second shielding part shield the external light such as sunlight. Most of the external light is shielded by the first and second shielding parts, and is prevented from reaching the first mirror or the displaying unit. Therefore, with the present invention, a head-up display device capable of taking countermeasures against sunlight without using a shutter nor a reflective polarizer film is provided.

In addition, the tip end of the first shielding part that extends forward from the rear portion is positioned in front of the tip end of the second shielding part that extends rearward from the front portion. Accordingly, the first shielding part and the second shielding part are partially and vertically overlapped. With this, the external light from above, while passing through the opening, is interrupted by the first and second shielding parts, and does not reach below the first and second shielding parts. The large opening is secured to allow the display unit to be protected against the external light while allowing a large image to be displayed.

In the invention according to claim 2, the first shielding part is provided in parallel with light that is reflected at the lower end in the reflection region of the second mirror. Because the first shielding part is provided in parallel with the light, it is possible to prevent the first shielding part from interrupting the light that is reflected. This can provide the larger opening, and project a large image.

In the invention according to claim 3, the display is provided along a line that connects the tip end of the first shielding part and the tip end of the second shielding part. The display can be arranged so as to be proximate to the line. The display is arranged so as to be proximate to the line to make it possible to prevent the generation of a dead space, and to downsize the head-up display device.

### Brief Description of the Drawings

Fig. 1 is a principle diagram of a first improved device.
Fig. 2 is a basic configuration diagram of a second improved product, in other words, a head-up display device according to the present invention.
Fig. 3 is an exploded diagram of a head-up display device according to an embodiment of the invention.
Fig. 4 is a cross-sectional diagram of the head-up display device illustrated in Fig. 3.
Fig. 5 is a diagram for explaining a shielding effect of first and second shielding parts illustrated in Fig. 4.
Fig. 6 is a diagram for explaining a further shielding effect of the first and second shielding parts illustrated in Fig. 4.
Fig. 7 is a diagram for explaining a modification example of the head-up display device illustrated in Fig. 4.

### Description of Embodiments

An embodiment of the present invention will be described on the basis of the attached drawings hereinafter.

### <Embodiment>

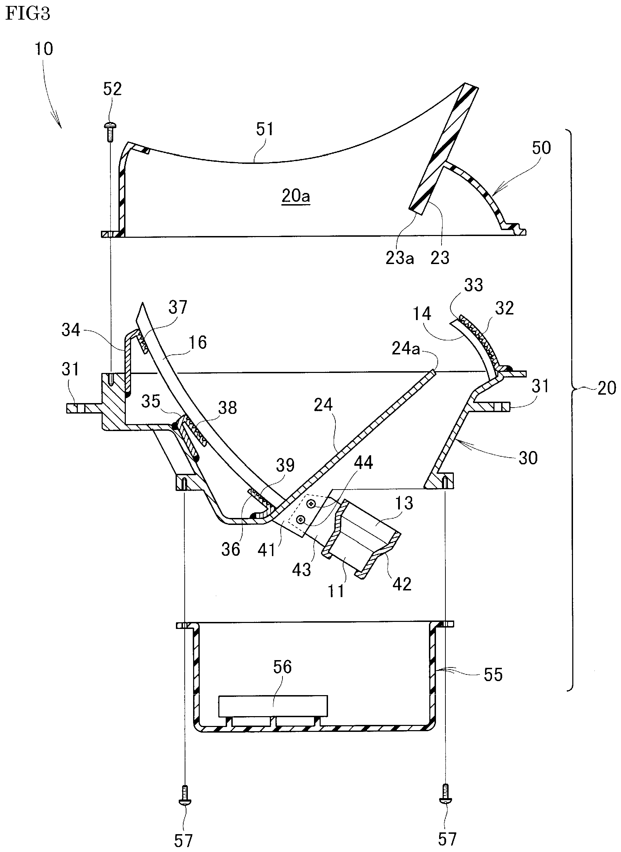

As illustrated in Fig. 3, in a head-up display device 10, a case 20 includes a center frame 30 that supports first and second mirrors 14, 16 and is provided with a second shielding part 24, an upper cover 50 that is attached to an upper side of the center frame 30 and is provided with a first shielding part 23, and a lower cover 55 that is attached to a lower side of the center frame 30. The first shielding part 23 extends from a rear portion toward a front portion of the case 20 below an opening 20a.

The center frame 30 is an aluminum die-casting product that is provided with attachment flanges 31, 31 on an outer circumference thereof, and is provided with the second shielding part 24 that extends internally and obliquely upward. The second shielding part 24 extends from the front portion toward the rear portion of the case 20 below the opening 20a.

For example, a stay 32 is welded to the center frame 30, and the first mirror 14 is fixed to the stay 32 with an adhesion layer 33 therebetween. Moreover, the second mirror 16 is fixed to stays 34 to 36 that are welded to an inner surface of the center frame 30 respectively with adhesion layers 37 to 39.

The stay 41 is extended from a lower portion of the center frame 30. Meanwhile, a light source 11 and a display 13 are fitted into a tubular bracket 42, and a bracket piece 43 extended from the tubular bracket 42 is fixed to the stay 41 with screws 44, 44.

The center frame 30, when being an aluminum die-casting product, has a significantly higher strength and richer rigidity than a resin molding. The first and second mirrors 14, 16 and the display 13 are collectively attached to the center frame 30 that is rich in rigidity, so that adjustment of these optical axes is unlikely to be misaligned. In addition, the center frame 30 that is rich in rigidity is attached to a vehicle with the attachment flanges 31, 31. When the cover is wholly made of resin, readjustment of the optical axes may be required due to the lack of rigidity. In contrast, the head-up display device 10 in the embodiment is rich in rigidity, and thus there is little concern about the readjustment of the optical axes.

The upper cover 50 is, for example, a polycarbonate molding, and is provided with a cover glass 51 on an upper surface thereof, and is integrally provided with the first shielding part 23 that extends obliquely downward. The cover glass 51 covers the opening 20a that is formed in an upper surface of the case 20.

The lower cover 55 is a bottomed tubular body that opens upward, for example, is an ABS resin molding, and internally includes a printing board 56.

To the center frame 30, the lower cover 55 is attached with screws 57, 57 from below, and the upper cover 50 is attached with a screws 52 from above.

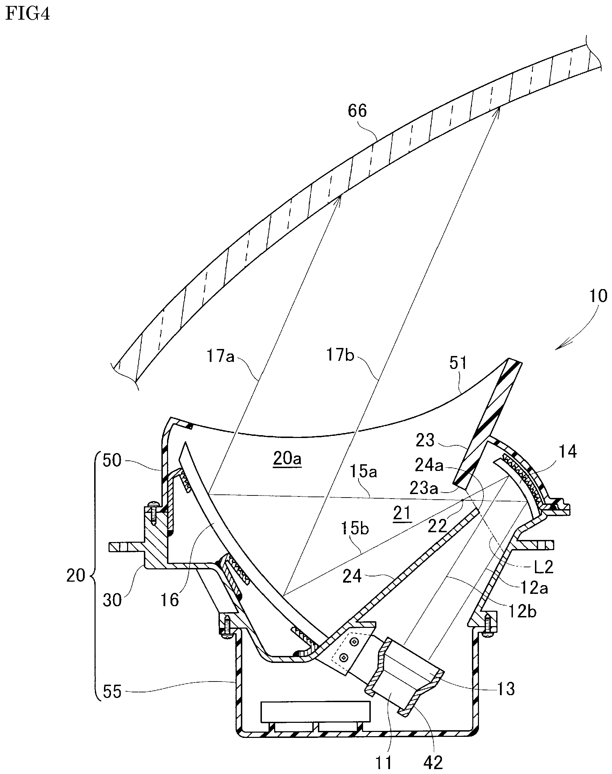

The head-up display device 10 illustrated in Fig. 4 is completed. At this time, a tip end 23a of the first shielding part 23 is positioned in front of a tip end 24a of the second shielding part 24. In addition, the display 13 is arranged in front of a line L2 that connects the tip end 23a of the first shielding part 23 and the tip end 24a of the second shielding part 24, and below the second shielding part 24.

Display light 12a, 12b emitted from the display 13 is reflected by the first mirror 14, and display light 15a, 15b reflected by the first mirror 14 passes between the first and second shielding parts 23, 24 and reaches the second mirror 16. Display light 17a, 17b reflected by the second mirror 16 rises and reaches a windshield 66 (projecting part 66 on which the reflected display light 17a, 17b is projected) of the vehicle.

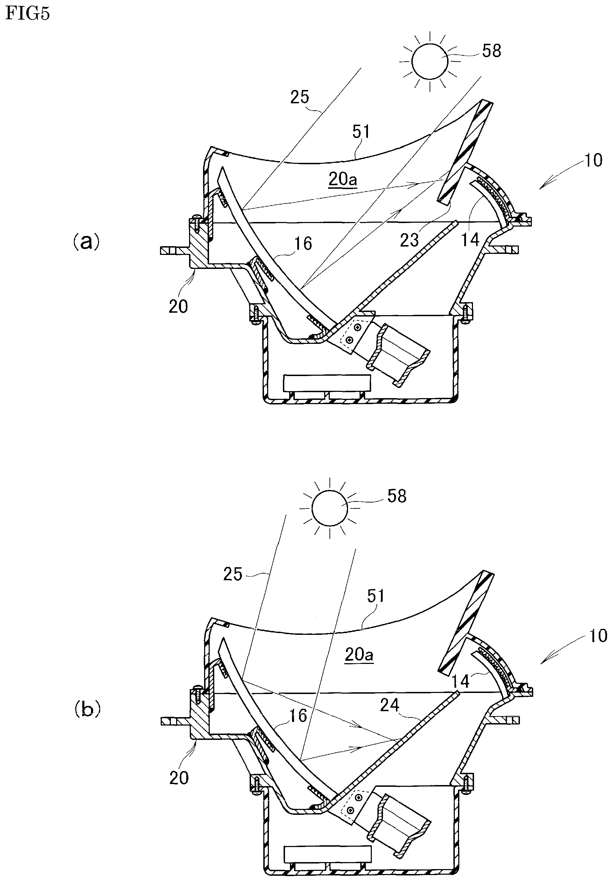

As illustrated in Fig. 5(a), when the altitude of the sun 58 is low, external light 25, which is typified by sunlight, passes through the cover glass 51, is reflected by the second mirror 16, and is shielded by the first shielding part 23. The first shielding part 23 includes polycarbonate excellent in heat resistance, and thus has a high strength against heat.

When the altitude of the sun 58 is high, as illustrated in Fig. 5(b), the external light 25 passes through the cover glass 51, is reflected by the second mirror 16, and is shielded by the second shielding part 24. The second shielding part 24 includes aluminum further excellent in heat resistance, and thus has a higher strength against heat.

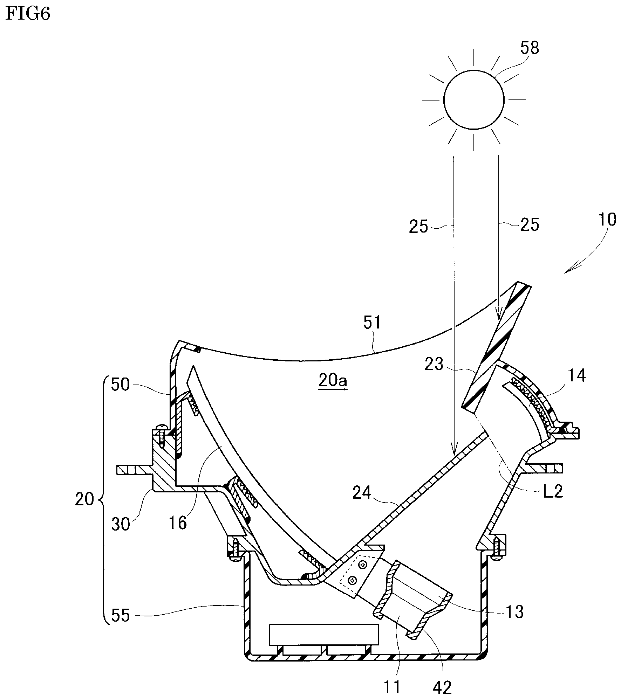

Fig. 6 is referred. The tip end 23a of the first shielding part 23 that extends forward from the rear portion is positioned in front of the tip end 24a of the second shielding part 24 that extends rearward from the front portion. Accordingly, the first shielding part 23 and the second shielding part 24 are partially and vertically overlapped. With this, the external light 25 from above, while passing through the opening 20a, is interrupted by the first and second shielding parts 23, 24, and does not reach below the first and second shielding parts 23, 24. In other words, the first and second shielding parts 23, 24 shield the external light 25 from above the opening 20a. The large opening 20a is secured to allow the display 13 to be protected against the external light while allowing a large video to be displayed.

The display 13 is arranged on the front side (inner side) from the line L2 that connects the tip end 23a of the first shielding part 23 and the tip end 24a of the second shielding part 24. This can prevent the external light from intruding from between the first and second shielding parts 23, 24, and prevent the external light from directly striking the display 13.

Fig. 4 is referred. The first shielding part 23 is provided in parallel with the display light 17b that is reflected at a lower end in a reflection region of the second mirror 16. Because the first shielding part 23 is provided in parallel with the display light 17b, it is possible to prevent the first shielding part 23 from interrupting the display light 17b that is reflected. This can provide the larger opening 20a, and project a large image.

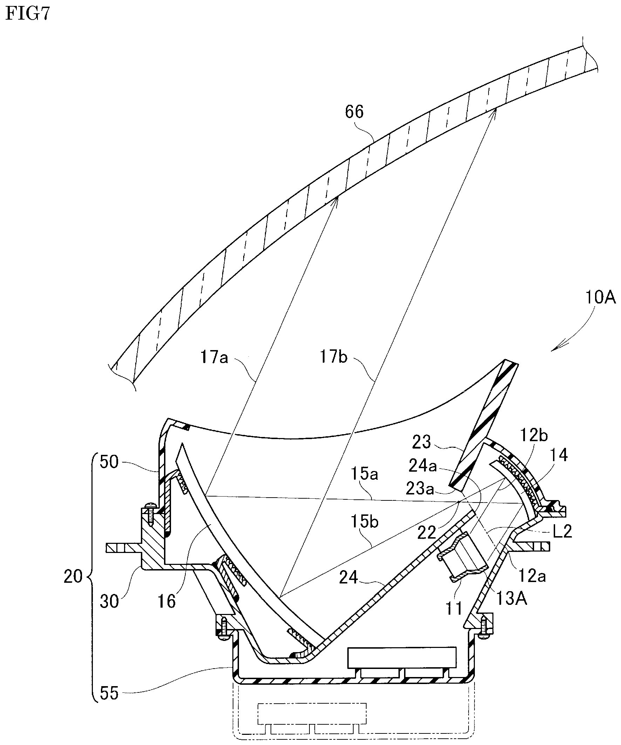

Fig. 7 is referred. In Fig. 7, a head-up display device 10A according to a modification example is illustrated. In the head-up display device 10A, a display 13A is provided along the line L2 that connects the tip end 23a of the first shielding part 23 and the tip end 24a of the second shielding part 24. The other basic configurations are common to those of the head-up display device 10 according to the first embodiment. As for parts common to those of the first embodiment, the reference numerals are also used, and the detailed explanations are omitted.

Also in the head-up display device 10A that is configured in this manner, the predetermined effect by the invention can be obtained.

In addition, the display 13A can be arranged so as to be proximate to the line L2. The display 13A is arranged so as to be proximate to the line L2 to make it possible to prevent the generation of a dead space, and to downsize the head-up display device 10A.

The head-up display device of the invention is suitable for passenger vehicles, and is allowable to be applied to general vehicles, ships, and aircraft. In other words, the present invention is not limited to the embodiment as long as the actions and effects of the invention are exhibited.

### Industrial Applicability

The head-up display device of the is suitable for a vehicle provided with a windshield.

### Reference Signs List

10, 10A ... Head-up display device
13, 13A ... Display
14 ... First mirror
16 ... Second mirror
20 ... Case
20a ... Opening
21 ... Optical path
22 ... Cross point
23 ... First shielding part
23a ... Tip end (of first shielding part)
24 ... Second shielding part
24a ... Tip end (of second shielding part)
L2 ... Line that connects tip end of first shielding part and tip end of second shielding part

## Claims

1. A head-up display device comprising a display that emits display light, a first mirror that reflects the display light emitted by the display, a second mirror that reflects the display light reflected by the first mirror, and a case that houses the display and the first and second mirrors, and includes an upper surface being opened, wherein:
the first mirror is a concave mirror having a curvature that causes the reflected display light to vertically cross each other before reaching the second mirror;
the second mirror is a mirror that reflects the received display light;
the case is provided with a first shielding part and a second shielding part that extend to the vicinity of the cross point where the reflected display light is to cross each other and sandwich an optical path between the first and second mirrors;
the first shielding part extends from a rear portion toward a front portion of the case, below the opening;
the second shielding part extends from the front portion toward the rear portion of the case, below the opening;
a tip end of the first shielding part is positioned in front of a tip end of the second shielding part;
the display is arranged in front of a line that connects the tip end of the first shielding part and the tip end of the second shielding part, and below the second shielding part; and
the first and second shielding parts shield external light that intrudes into the case from an outside of the case, is reflected by the second mirror, and travels toward the first mirror, and external light from above the opening.

2. The head-up display device according to claim 1, wherein the first shielding part is provided in parallel with light that is reflected at a lower end in a reflection region of the second mirror.

3. The head-up display device according to claim 1 or claim 2, wherein the display is provided along a line that connects the tip end of the first shielding part and the tip end of the second shielding part.
